Europäisches Patentamt

European Patent Office

Office européen des brevets

(19)

(11) Veröffentlichungsnummer : **0 419 928 B1**

# (12) EUROPÄISCHE PATENTSCHRIFT

(45) Veröffentlichungstag der Patentschrift :
**12.01.94 Patentblatt 94/02**

(51) Int. Cl.$^5$ : **C08G 18/10,** C08G 18/12,
C08G 18/42, C08G 18/44,
C09J 175/06

(21) Anmeldenummer : **90117450.8**

(22) Anmeldetag : **11.09.90**

(54) **Lagerstabile Polyurethanklebstoffe.**

Die Akte enthält technische Angaben, die nach
dem Eingang der Anmeldung eingereicht
wurden und die nicht in dieser Patentschrift
enthalten sind.

(30) Priorität : **23.09.89 DE 3931844**

(43) Veröffentlichungstag der Anmeldung :
**03.04.91 Patentblatt 91/14**

(45) Bekanntmachung des Hinweises auf die
Patenterteilung :
**12.01.94 Patentblatt 94/02**

(84) Benannte Vertragsstaaten :
**DE FR GB IT**

(56) Entgegenhaltungen :
**EP-A- 0 125 009**
**EP-A- 0 248 658**
**DE-A- 3 230 009**

(73) Patentinhaber : **BAYER AG**
**D-51368 Leverkusen (DE)**

(72) Erfinder : **Münzmay, Thomas, Dr.**
**Goethestrasse 57d**
**D-4047 Dormagen (DE)**
Erfinder : **Stepanski, Horst, Dr.**
**Raushofstrasse 20**
**D-5090 Leverkusen 3 (DE)**
Erfinder : **Meckel, Walter, Dr.**
**Zonserstrasse 9**
**D-4040 Neuss (DE)**

## Beschreibung

Die Erfindung betrifft bei Raumtemperatur wenigstens teilweise kristalline Polyurethanklebstoffe.

Thermoplastische Polyurethanklebstoffe, deren Festigkeit aus dem Viskositätsaufbau und/oder der Kristallisation des Klebstoffes beim Abkühlen resultiert, sind bekannter Stand der Technik. Allerdings müssen diese Klebstoffpolymere, um eine entsprechende Verarbeitung zu ermöglichen, weitgehend linear aufgebaut sein und ergeben daher nur geringe Klebfestigkeiten bei erhöhten Temperaturen (vgl. Vieweg/Höchtlen, Kunststoffhandbuch, Band 7, Polyurethane, Carl-Hanser-Verlag, München 1966). Bei derartigen Schmelzklebstoffen muß zugunsten einer niedrigen Verarbeitungstemperatur ein geringer Wärmestand in Kauf genommen werden. Will man dagegen Verklebungen mit hoher Wärmefestigkeit erhalten, so muß man bei üblichen Schmelzklebstoffen mit sehr hohen Applikationstemperaturen arbeiten, was nicht in jedem Falle möglich ist.

Eine Lösung dieses Problems bieten reaktive Polyurethansysteme. Das bei der Verarbeitung niedrigviskose und niedermolekulare Polymer baut während oder nach der Verarbeitung durch chemische Reaktion Molekulargewicht und Festigkeit der Verklebung auf. Reaktive Polyurethansysteme können sowohl zweikomponentig, als auch einkomponentig konzipiert sein. Zweikomponentenpolyurethansysteme bestehen aus einer isocyanathaltigen Komponente und einer isocyanatreaktiven Komponente. Beide Komponenten müssen vor Verarbeitung miteinander vermischt werden. Man erhält auf diese Art Klebstoffe mit niedriger Verarbeitungstemperatur und sehr gutem Wärmestand. Nachteilig an diesen Klebstoffen ist die aufwendige Art der Verarbeitung sowie die geringe Lagerfähigkeit und die daraus resultierende kurze Verarbeitbarkeit der gebrauchsfertigen Klebstoffmischung.

Der Nachteil einer zeitlich begrenzten Verarbeitbarkeit tritt bei echten Einkomponentenpolyurethansystemen nicht in diesem Maße auf.

DE-A-3 543 120 beschreibt einen Polyurethanschmelzklebstoff, der auf Grund von flüssigen Polyolen eine niedrige Verarbeitungsviskosität, lange Verarbeitungszeit und einen guten Wärmestand realisiert. Dies wird durch den Einsatz von sogenannten verkappten Isocyanaten erreicht. Die Schmelzklebstoffe werden durch zweikomponentige Verarbeitung eines Polyisocyanates und eines Polyolgemisches, welches das Verkappungsmittel enthält, unmittelbar vor dem Klebstoffauftrag gemischt und erst auf dem zu verklebenden Substrat hergestellt. Dieses Verfahren bedeutet für den Anwender einen erheblichen technischen Aufwand in der Mischtechnik und stellt damit einen hohen Kostenaufwand dar. Zur Durchhärtung sind hohe Temperaturen notwendig.

In der EP-A-248 658 werden einkomponentig zu verarbeitende Polyurethanschmelzklebstoffe beschrieben, die ebenfalls mittels verkappter Isocyanate vernetzt werden. Dort werden Schmelzklebstoffe auf Basis hochschmelzender Polyester beschrieben, die als Hauptbestandteil aromatische Dicarbonsäuren enthalten. Jedoch schränken die zur Verarbeitung (T ) 100 bis 125° C) bzw. zur Aushärtung nötigen hohen Temperaturen (T = 180° C) die Verwendbarkeit zur Verklebung von z.B. Klebstoffmaterialien stark ein. Weiterhin haben die dort beanspruchten Schmalzklebstoffe den Nachteil, daß sie bei Temperaturen oberhalb von 110° C wieder erweichen.

In US-A-4 722 969 werden Einkomponentenreaktivsysteme beschrieben, die bei tiefen Temperaturen zu verarbeiten sind, aber auf Grund des erforderlichen hohen Verzweigungsgrades für flexible Substrate eine zu geringe Flexibilität des Klebstoffes aufweisen und die auf Grund der hohen Katalyse, die notwendig ist, um die geforderte rasche Aushärtung zu realisieren, nur eine begrenzte Lagerstabilität von 2 Monaten bei Raumtemperatur aufweisen.

Auch in US-A-4 798 879 werden verkappte Isocyanate als Inhaltstoffe eines Klebstoffsystems beschrieben. Es wird dort ein bei Raumtemperatur schnell abbindendes Zweikomponentenklebstoffsystem beschrieben, bestehend aus einem verkappte Isocyanatgruppen enthaltenden Prepolymer und primären Aminen als Härter. Umso überraschender ist, daß gemäß nachfolgend beschriebener Erfindung lagerstabile, Einkomponentensysteme aus verkappten Isocyanatgruppen enthaltenden Prepolymeren und aminischen oder alkoholischen Härtern erhalten werden.

Aufgabe der vorliegenden Erfindung war es, Klebstoffmassen mit ausreichender Lagerfähigkeit bei erhöhten Temperaturen, niedriger Schmelzviskosität und schneller Viskositätserhöhung bei bereits relativ niedriger Ausheiztemperatur sowie schnelle Durchhärtung bereitzustellen.

Gegenstand der Erfindung sind bei Raumtemperatur wenigstens teilweise kristalline, überwiegend lineare, unter dem Einfluß von Hitze vernetzbare Polyurethanklebstoffe, auf Basis von

    a) einem wenigstens teilweise kristallinen, verkappte Isocyanatgruppen enthaltenden Polyurethanprepolymer auf Basis

        a1) mindestens einer wenigstens teilweise kristallinen organischen Polyhydroxylverbindung aus der Gruppe der Polyester oder Polycarbonate mit Molekulargewichten größer 400, insbesondere größer 500, bevorzugt zwischen 1.500 und 10.000, besonders bevorzugt zwischen 2.000 und 5.000 und

a2) gegebenenfalls einer Polyhydroxylverbindung mit einer Hydroxylfunktionalität von wenigstens 2, bevorzugt mit einer Funktionalität von 2 bis 4, besonders bevorzugt der Funktionalität 3, und einem Molekulargewicht kleiner 500, bevorzugt einem Molekulargewicht zwischen 62 und 250, sowie

a3) einer Polyisocyanatkomponente, bestehend aus mindestens einem organischen Polyisocyanat einer Funktionalität von wenigstens 2, bevorzugt zwischen 2 und 2,7, sowie

a4) mindestens einem aus der Polyurethanchemie bekannten monofunktionellen Blockierungsmittel für Isocyanatgruppen,

wobei ein Äquivalenzverhältnis der Isocyanatgruppen der Komponente a3) zu der Summe der gegen Isocyanatgruppen reaktiven Gruppen der Komponenten a1) und a2) von 1,1 bis 3, bevorzugt von 1,5 bis 2,5, und besonders bevorzugt von 1,8 bis 2,2, eingehalten wird und wobei ein Äquivalenzverhältnis der aus dem Verhältnis der Komponenten a1) bis a3) resultierenden Isocyanatgruppen zu monofunktionellem Blockierungsmittel a4) von 0,8 bis 1,15, bevorzugt von 0,95 bis 1,05, eingehalten wird, sowie

b) mindestens einem niedermolekularen NH- und/oder OH-funktionellen Kettenverlängerungs- oder Vernetzungsmittel des Molekulargewichtsbereichs 32 bis 500, bevorzugt von 61 bis 300, mit einer Funktionalität von wenigstens 2, bevorzugt 2 bis 3.

Weiterhin soll das Äquivalenzverhältnis der verkappten Isocyanatgruppen aus der Komponente a) zu den isocyanatreaktiven Gruppen der Komponente b), bevorzugt 0,8 und 2,00, bevorzugt 0,95 und 1,50, besonders bevorzugt 1,00 und 1,20, betragen.

Gegenstand der Erfindung ist weiterhin ein Verfahren zum Verkleben von Substraten unter Verwendung der erfindungsgemäßen Polyurethanmassen.

Weiterhin ist das Polyurethanprepolymer a) wenigstens teilweise kristallin.

Die Polyhydroxylverbindung a1) ist wenigstens teilweise kristallin und hat einen "kristallinen Schmelzbereich" bevorzugt zwischen 40°C und 150°C.

Der hier verwendete Ausdruck "kristalliner Schmelzbereich" steht für die Temperatur, bei der die kristallinen Segmente des Polymerisats schmelzen, und sie wird bestimmt als die Temperatur des hauptsächlichen Endothermie-Maximumus in einer thermischen Differentialanalyse z.B. der Differential Scanning Calorimetry (DSC).

Als Polyesterpolyole a1) kommen insbesondere lineare Polyesterdiole oder auch schwach verzweigte Polyesterpolyole in Betracht, wie sie in bekannter Weise aus aliphatischen, cycloaliphatischen oder aromatischen Dicarbonsäuren wie z.B. Adipin-, Suberin-, Azelain-, Sebazin-, Dodecandicarbon-, Terephthal- oder Isophthalsäure oder deren Gemische und mehrwertigen, insbesondere zweiwertigen Alkoholen, wie z.B. Ethylenglykol, Diethylenglykol, 1,4-Butandiol, 1,6-Hexandiol, 1,8-Octandiol, 1,10-Decandiol, 1,12-Dodecandiol oder deren Gemische unter Mitverwendung geringer Mengen an höher funktionellen Polyolen, wie Trimethylolpropan oder Glycerin hergestellt werden können. Als mehrwertige Alkohole kommen natürlich auch cycloaliphatische und/oder aromatische Di- und Polyhydroxylverbindungen in Frage. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden.

Selbstverständlich kann es sich bei den Polyesterpolyolen auch um ein Homo- oder Mischpolymerisat von Lactonen handeln, die vorzugsweise durch Anlagerung von Lactonen bzw. Lactongemischen wie Butyrolacton, $\varepsilon$-Caprolacton und/oder Methyl-$\varepsilon$-caprolacton an geeignete di- und/oder höherfunktionelle Startermoleküle wie z.B. die vorstehend als Aufbaukomponenten für Polyesterpolyole genannten niedermolekularen, mehrwertigen Alkohole erhalten werden. Die entsprechenden Polymerisate des $\varepsilon$-Caprolacton sind besonders bevorzugt.

Auch Hydroxylgruppen aufweisende Polycarbonate kommen als Polyolkomponente a1) in Betracht, z.B. solche, die durch Umsetzung von Diolen wie 1,4-Butandiol und/oder 1,6-Hexandiol mit Diarylcarbonaten, z.B. Diphenylcarbonat oder Phosgen hergestellt werden können.

Zu bevorzugten Komponenten a2) gehören beispielsweise einfache, mehrwertige Alkohole wie Ethylenglykol, Propylenglykol, 1,3-Propandiol, 1,4-Butandiol, 1,6-Hexandiol, Trimethylolpropan, Glycerin oder Pentaerythrit.

Auch niedermolekulare Polyesterdiole wie z.B. Adipinsäure-bis-(hydroxyethyl)-ester oder niedermolekulare, Ethergruppen aufweisende Diole wie z.B. Diethylenglykol, Triethylenglykol, Tetraethylenglykol, Dipropylenglykol, Tripropylenglykol oder Tetrapropylenglykol können als Komponenten a2) mitverwendet werden.

Für das erfindungsgemäße Verfahren als Ausgangsmaterialien a3) geeignete organische Polyisocyanate sind beliebige organische Verbindungen, die mindestens zwei freie Isocyanatgruppen aufweisen. Vorzugsweise werden Diisocyanate $X(NCO)_2$ eingesetzt, wobei X einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methylcyclohexan, 4,4'-Diisocyanatodicyclohexylmethan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,4'-Diisocyanatodiphenylmethan, p-Xylylendiisocyanat, sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig (mit)zuverwenden.

Gegebenenfalls können bei der Herstellung der Polyadditionsprodukte auch Monoisocyanate wie z.B. Phenylisocyanat, Hexylisocyanat oder Dodecylisocyanat in untergeordneten, d.h. in bis zu 10 NCO-Äquivalent-% liegenden Mengen mitverwendet werden, wobei jedoch durch gleichzeitige Mitverwendung von höher als difunktionellen Aufbaukomponenten ein vorzeitiger Kettenabbruch verhindert werden muß.

Als erfindungsgemäße, monofunktionelle Blockierungsmittel a4) für Isocyanatgruppen können aromatische Hydroxylverbindungen, z.B. Phenol, Kresole, Nonylphenol, Naphthole, Hydroxyacetophenone, Hydroxybenzoesäureester, z.B. 4-Hydroxybenzoesäureethylester oder 4-Hydroxybenzoesäuremethylester, Oxime, z.B. 2-Butanonoxim, Acetonoxim, Cyclohexanonoxim, Enolformen von 1,3-Dicarbonylverbindungen, z.B. Acetylaceton, Ethylacetoacetat, Malonester, Lactame, z.B. ε-Caprolactam und Diarylamine, z.B. Diphenylamin verwendet werden. Zu den bevorzugten Blockierungsmitteln gehören 2-Butanonoxim, 4-Hydroxybenzoesäureester und ε-Caprolactam. Natürlich können bei Bedarf auch Gemische von geeigneten Blockierungsmitteln eingesetzt werden.

Bevorzugte Komponente b) sind beispielsweise Ethylendiamin, Hexamethylendiamin, Piperazin, 2,5-Dimethylpiperazin, 1-Amino-3-amino-methyl-3,5,5-trimethylcyclohexan (Isophorondiamin), 4,4'-Diaminocyclohexylmethan, 1,4-Diaminocyclohexan, Bis-(4-amino-3-methylcyclohexyl)-methan, 1,2-Diaminopropan, Hydrazin, Hydrazinhydrat, Aminosäurehydrazide wie z.B. 2-Aminoessigsäurehydrazid oder Bis-hydrazide wie z.B. Bernsteinsäure-bis-hydrazid, aliphatische Triamine, z.B. N,N'-Di-(2-aminoethyl)-amin, aliphatische Polyamine, z.B. Triethylentetramin, aromatische Polyamine, z.B. 2,4- und 2,6-Toluendiamin, 1,2-, 1,3- und 1,4-Diaminobenzol, Gemische aus 1,3-Diamino-2,6-diethyl-4-methylbenzol und 1,3-Diamino-4,6-diethyl-2-methylbenzol, durch saure Kondensation von Aldehyden wie z.B. Formaldehyd mit Anilin zugängliche Polyamine, z.B. 4,4'-, 2,4'- und 2,2'-Diamino-diphenylmethan und höherfunktionelle Kondensationsprodukte. Es können erfindungsgemäß auch Gemische obiger beispielhaft genannter Verbindungen als Komponente b) eingesetzt werden.

Als erfindungsgemäße OH-funktionelle Kettenverlängerungs- und Vernetzungsmittel b) können beispielsweise die für Komponente a2) genannten Polyhydroxylverbindungen eingesetzt werden. Weitere Beispiele für als Komponente b) in Frage kommende Polyhydroxylverbindungen sind niedermolekulare Additionsprodukte von Ethylenoxid und/oder Propylenoxid an aliphatische oder cycloaliphatische Di- oder Polyole, an aromatische Di-oder Polyole, an primäre oder sekundäre Mono- oder Polyamine.

Ebenfalls als Komponente b) zu verwendende Verbindungen sind die aus der Polyurethanchemie an sich bekannten Amine in blockierter Form, d.h. in Form der entsprechenden Ketimine (DE-A-2 725 589), Ketazine (DE-A-2 811 148, US-A-4 269 748) oder Aminsalze (US-A-4 292 226). Auch Oxazolidine, wie sie beispielsweise gemäß DE-A-2 732 131 bzw. US-A-4 192 937 zum Einsatz gelangen, stellen verkappte Amine dar und können als Komponente b) Verwendung finden.

Weitere Vertreter von beim erfindungsgemäßen Verfahren als Aufbaukomponenten a1), a2), a3) oder b) einzusetzenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, beschrieben.

Selbstverständlich können in der Polyurethanchemie übliche Hilfs- und Zusatzstoffe wie z.B. Katalysatoren, z.B. tertiäre Amine, z.B. Triethylamin, Benzyl-diethyl-amin, Diazabicyclooctan (DABCO), N-Methyl-morpholin, 1,8-Diaza-bicyclo-5,4,0-undecen-7 (DBU), metallorganische Verbindungen, z.B. organische Zinn-Verbindungen, z.B. Dibutylzinndilaurat, Dimethylzinndichlorid zu jedem beliebigen Zeitpunkt des Herstellverfahren der erfindungsgemäßen Polyurethanmassen zugesetzt werden.

Als weitere Hilfs- und Zusatzstoffe seien beispielhaft Füllstoffe, Pigmente, Stabilisatoren gegen fotochemischen Abbau, gegen Oxidation oder Microben, Verlauf- und Benetzungsmittel etc. genannt.

Die Herstellung der erfindungsgemäßen Polyurethanmassen kann beispielsweise derart erfolgen, daß in bekannter Art und Weise aus den Komponenten a1) und a3) sowie gegebenenfalls a2) ein Isocyanat-Prepolymer hergestellt wird, welches anschließend mit einem Isocyanatblockierungsmittel a4) verkappt wird. In das verkappte Polyurethanprepolymer kann anschließend oder auch zu einem beliebigen späteren Zeitpunkt das Kettenlängerungs-/Vernetzungsmittel b) eingearbeitet werden. Es ist selbstverständlich auch möglich, die Komponenten a1) bis a4) in einer beliebigen anderen Reihenfolge oder auch in einem Reaktionsschritt miteinander umzusetzen.

Um als erfindungsgemäße Polyurethanmassen einsetzbare Systeme zu erhalten, müssen die Komponenten a1) bis a4) so aufeinander abgestimmt sein, daß ein "kristallines, verkapptes Prepolymer" nach dem erfindungsgemäßen Verfahren resultiert. Als kristalline, verkappte Prepolymere a) werden solche Prepolymere bezeichnet, die im Differential-Scanning-Calorimetry-Diagramm (DSC) eine Endothermie des Aufschmelzens kristalliner Weichsegmentbereiche im Temperaturbereich zwischen 40 und 150°C zeigen.

## Beispiel 1

920 g eines 1,6-Hexandiolpolyadipats der OH-Zahl (= OHZ) 50 werden mit 200 g 4,4'-Diphenylmethandiisocyanat bei 60°C bis zu einem konstanten Isocyanatgehalt von 2,85 % (Theorie 2,91 %) umgesetzt. Es werden 67,3 g 4-Hydroxybenzoesäureethylester hinzugefügt und die Reaktion bei 60°C weitergeführt, bis die Reaktionsmischung isocyanatfrei ist. Das Prepolymer wird in Teflonformen gegossen und erstarrt bei Raumtemperatur zu harten Platten, die sich leicht granulieren lassen. Das Prepolymer hat einen Gehalt an verkappten Isocyanatgruppen von ca. 2,70 %.

Das DSC-Diagramm obigen Prepolymers zeigt eine starke Endothermie für das Aufschmelzen des Polyesterweichsegments mit Maximum bei 55°C.

Es werden jeweils 100 g des obigen Prepolymer mit

a) 2,9 g 1,4-Butandiol + 0,01 g Dibutylzinndilaurat
b) 2,0 g Glyzerin + 0,01 g Dibutylzinndilaurat
c) 2,9 g Trimethylolpropan + 0,01 g Dibutylzinndilaurat

bei 60°C gemischt.

Die oben beschriebenen reaktiven Einkomponentensysteme werden 72 Stunden bei 50°C gelagert. Anschließend lassen sich alle drei Proben bei 60°C aufschmelzen und sind gut verarbeitbar.

Bei Raumtemperatur gelagerte Proben sind noch nach 6 Monaten aufschmelzbar und gut verarbeitbar.

## Beispiel 2

1.225 g eines 1,4-Butandiolpolyadipats der OHZ 50 werden mit 168 g Hexamethylendiisocyanat bei 80°C umgesetzt. Nach 5 Stunden bei 80°C hat die Reaktionsmischung einen konstanten Isocyanatgehalt von 2,95 % (Theorie 3,02 %). Es werden 91,35 g 2-Butanonoxim hinzugefügt. Nach weiteren 4 Stunden bei 80°C ist die Reaktionsmischung isocyanatfrei. Das Prepolymer wird in Teflonformen gegossen und erstarrt bei Raumtemperatur zu harten Platten, die sich leicht granulieren lassen. Das Prepolymer hat einen Gehalt an verkappten Isocyanatgruppen von ca. 2,85 %.

Das DSC-Diagramm obigen Prepolymers zeigt eine starke Endothermie mit Maximum bei 48°C für das Aufschmelzen des Polyesterweichsegments.

Jeweils 100 g des obigen Prepolymers werden bei 60°C mit

a) 3,45 g Hexamethylendiamin
b) 6,60 g 4,4'-Methylendianilin

gemischt.

Die resultierenden Einkomponentengemische werden 72 Stunden bei 50°C gelagert. Der Gehalt an freiem Amin in den Einkomponentenmischungen wird vor und nach der Lagerung bei 50°C bestimmt. Es kann kein signifikanter Abfall des Amingehaltes festgestellt werden. Die Einkomponentengemische sind wieder aufschmelzbar und bei 60°C gut verarbeitbar. Bei Raumtemperatur gelagerte Proben sind noch nach 6 Monaten aufschmelzbar und gut verarbeitbar.

## Beispiel 3

1.225 g eines 1,4-Butandiolpolyadipats der OHZ 50 werden mit 222 g Isophorondiisocyanat bei 80°C umgesetzt. Nach 12 Stunden bei 80°C hat die Reaktionsmischung einen konstanten Isocyanatgehalt von 2,85 % (Theorie 2,90 %). Es werden 91,35 g 2-Butanonoxim hinzugefügt. Nach weiteren 3 Stunden bei 80°C ist die Reaktionsmischung isocyanatfrei. Das Prepolymer wird in Teflonformen gegossen und erstarrt bei Raumtemperatur zu harten Platten, die sich leicht granulieren lassen. Das Prepolymer hat einen Gehalt an verkappten Isocyanatgruppen von ca. 2,65 %.

Das DSC-Diagramm obigen Prepolymers zeigt eine starke Endothermie mit Maximum bei 47°C für das Aufschmelzen des Polyesterweichsegments.

Jeweils 100 g obigen Prepolymers werden bei 60°C mit
a) 3,30 g Hexamethylendiamin
b) 6,25 g 4,4'-Methylendianilin
gemischt.

Die resultierenden Einkomponentengemische werden 72 Stunden bei 50°C gelagert. Der Gehalt an freiem Amin in den Einkomponentenmischungen wird vor und nach der Lagerung bei 50°C bestimmt. Es kann kein signifikanter Abfall des Amingehaltes festgestellt werden. Die Einkomponentengemische sind wieder aufschmelzbar und bei 60°C gut verarbeitbar. Bei Raumtemperatur gelagerte Proben sind noch nach 6 Monaten aufschmelzbar und gut verarbeitbar.

Beispiel 4

Eine Mischung aus 1.225 g eines 1,6-Hexandiolpolyadipats der OHZ 50 und 13,4 g Trimethylolpropan werden bei 65°C mit 325 g 4,4'-Diphenylmethandiisocyanat umgesetzt. Die Reaktion wird bis zu einem konstanten Isocyanatgehalt von 3,45 % (Theorie 3,50 %) geführt. Dann werden 118,7 g 2-Butanonoxim hinzugefügt und die Reaktion bis zu einem Isocyanatgehalt von 0 % fortgeführt. Das Prepolymer wird in Teflonformen gegossen und erstarrt bei Raumtemperatur zu harten Platten, die sich leicht granulieren lassen. Das Prepolymer hat einen Gehalt an verkappten Isocyanatgruppen von ca. 3,25 %.

Das DSC-Diagramm obigen Prepolymers zeigt eine starke Endothermie mit Maximum bei 50°C für das Aufschmelzen des Polyesterweichsegments.

Jeweils 100 g obigen Prepolymers werden bei 60°C mit
a) 8,10 g Bis-(4-amino-cyclohexyl)-methan
b) 6,85 g eines 70:30 Gemisches aus 1,3-Diamino-2,6-diethyl-4-methylbenzol und 1,3-Diamino-4,6-diethyl-2-methylbenzol
c) 9,20 g Bis-(4-amino-3-methyl-cyclohexyl)-methan
gemischt.

Die resultierenden Einkomponentengemische werden 72 Stunden bei 50°C gelagert. Der Gehalt an freiem Amin in den Einkomponentenmischungen wird vor und nach der Lagerung bei 50°C bestimmt. Es kann kein signifikanter Abfall des Amingehaltes festgestellt werden. Die Einkomponentengemische sind wieder aufschmelzbar und bei 60°C gut verarbeitbar. Bei Raumtemperatur gelagerte Proben sind noch nach 6 Monaten aufschmelzbar und gut verarbeitbar.

Beispiel 5

2.000 g eines 1,6-Hexandiolpolyadipats der OHZ 28 werden mit 250 g 4,4'-Diphenylmethandiisocyanat bei 65°C umgesetzt. Nach 5 Stunden bei 65°C hat die Reaktionsmischung einen konstanten Isocyanatgehalt von 1,85 % (Theorie 1,87 %). Es werden 91,35 g 2-Butanonoxim hinzugefügt. Nach weiteren 3 Stunden bei 60°C ist die Reaktionsmischung isocyanatfrei. Das Prepolymer wird in Teflonform gegossen und erstarrt bei Raumtemperatur zu harten Platten, die sich leicht granulieren lassen. Das Prepolymer hat einen Gehalt an verkappten Isocyanatgruppen von ca. 1,80 %.

Das DSC-Diagramm obigen Prepolymers zeigt eine starke Endothermie mit Maximum bei 55°C für das Aufschmelzen des Polyesterweichsegments.

Jeweils 100 g obigen Prepolymers werden bei 60°C mit
a) 4,30 g Bis-(4-amino-cyclohexyl)-methan
b) 3,60 g eines 70:30 Gemisches aus 1,3-Diamino-2,6-diethyl-4-methylbenzol und 1,3-Diamino-4,6 diethyl-2-methylbenzol
c) 4,90 g Bis-(4-amino-3-methyl-cyclohexyl)-methan
gemischt.

Die resultierenden Einkomponentengemische werden 72 Stunden bei 50°C gelagert. Der Gehalt an freiem Amin in den Einkomponentenmischungen wird vor und nach der Lagerung bei 50°C bestimmt. Es kann kein signifikanter Abfall des Amingehaltes festgestellt werden. Die Einkomponentengemische sind wieder aufschmelzbar und bei 60°C gut verarbeitbar. Bei Raumtemperatur gelagerte Proben sind noch nach 6 Monaten aufschmelzbar und gut verarbeitbar.

Vergleichsbeispiel 7

Folgendes Beispiel wird ähnlich Beispiel 3 der EP-A-248 658, aber mit 2-Butanonoxim als Blockierungsmittel, durchgeführt.

370 g eines Mischesters aus 1,6-Hexandiol, Terephthalsäure und Adipinsäure im Molverhältnis 8,5:5:2,5 der OHZ 56 und 94 g Diphenylmethandiisocyanat werden bei 110°C bis zu einem konstanten Isocyanatgehalt von 3,40 % (Theorie 3,46 %) umgesetzt. Dann werden 33,1 g 2-Butanonoxim zugegeben und weitere 2 Stunden bei 95°C weitergerührt. Danach ist das Reaktionsgemisch isocyanatfrei. Das Prepolymer wird in Teflonformen gegossen und erstarrt bei Raumtemperatur zu harten Platten, die sich leicht granulieren lassen. Das Prepolymer hat einen Gehalt an verkappten Isocyanatgruppen von ca. 3,20 %.

Das DSC-Diagramm obigen Prepolymers zeigt eine starke Endothermie mit Maximum bei 90°C für das Aufschmelzen des Polyesterweichsegments.

Die obige Mischung wird 72 Stunden bei 50°C gelagert. Die Einkomponentenmischung ist wieder aufschmelzbar und bei 60°C verarbeitbar.

## Beispiel 8

1.000 g eines 1,6-Hexandiolpolyadipats der OHZ 37,5 werden mit 165 g 4,4'-Diphenylmethandiisocyanat bei 65°C umgesetzt. Nach 4 Stunden bei 65°C hat die Reaktionsmischung einen konstanten Isocyanatgehalt von 2,30 % (Theorie 2,38 %). Es werden 75,8 g ε-Caprolactam hinzugefügt. Nach weiteren 2 Stunden bei 70°C ist die Reaktionsmischung isocyanatfrei. Das Prepolymer wird in Teflonformen gegossen und erstarrt bei Raumtemperatur zu harten Platten, die sich leicht granulieren lassen. Das Prepolymer hat einen Gehalt an verkappten Isocyanatgruppen von ca. 2,15 %.

Das DSC-Diagramm obigen Prepolymers zeigt eine starke Endothermie mit Maximum bei 55°C für das Aufschmelzen des Polyesterweichsegments.

Jeweils 100 g des obigen Prepolymers werden bei 60°C mit
a) 5,40 g Bis-(4-amino-cyclohexyl)-methan
b) 4.55 g eines 70:30 Gemisches aus 1,3-Diamino-2,6-diethyl-4-methylbenzol und 1,3-Diamino-4,6-diethyl-2-methylbenzol
c) 6,10 g Bis-(4-amino-3-methyl-cyclohexyl)-methan
d) 1,75 g N,N-Di-(2-amino-ethyl)-amin
gemischt.

Die resultierenden Einkomponentengemische werden 72 Stunden bei 50°C gelagert. Der Gehalt an freiem Amin in den Einkomponentenmischungen wird vor und nach der Lagerung bei 50°C bestimmt. Es kann kein signifikanter Abfall des Amingehaltes festgestellt werden. Die Einkomponentengemische sind wieder aufschmelzbar und bei 60°C gut verarbeitbar. Bei Raumtemperatur gelagerte Proben sind noch nach 6 Monaten aufschmelzbar und gut verarbeitbar.

## Beispiel 9

Die Klebfestigkeiten der Einkomponentenklebemassen wurden in Anlehnung an DIN 53 283 "Bestimmung der Klebfestigkeiten von einschnittig überlappten Klebungen (Zugscherversuch)" gemessen. Als Fügeteile dienten Prüfkörper aus glasfaserverstärktem Polyester (SMC).

| Bsp. | Ausheiz-T. (°C) | Ausheizzeit (min) | Handfestig-keit*) | Zugfestig-keit (MPa) |
|---|---|---|---|---|
| 1 b | 110 | 30 | + | 4,4 |
| 1 c | 110 | 30 | + | ›5 |
| 4 a | 110 | 20 | + | ›5 |
| 4 b | 110 | 20 | + | 3,8 |
| 4 c | 110 | 20 | + | 3,1 |
| 5 a | 110 | 20 | + | ›5 |
| 5 b | 110 | 20 | + | 3,5 |
| 5 c | 110 | 20 | + | ›5 |
| V7 | 110 | 20 | - | 4,5 |
| V7 | 110 | 30 | - | 4,8 |
| V7 | 180 | 30 | - | ›5 |
| 8 a | 160 | 15 | + | ›5 |
| 8 b | 160 | 15 | + | 4,5 |
| 8 c | 160 | 15 | + | ›5 |

* Handfestigkeit bei 110° C;

+ handfest,

- nicht entformbar

Unter Handfestigkeit wird Entformbarkeit nach dem Ausheizvorgang verstanden.

**Patentansprüche**

1. Bei Raumtemperatur wenigstens teilweise kristalline, überwiegend lineare, bei Hitze vernetzbare Polyurethanklebstoffe auf Basis von NCO-Gruppen enthaltenden Polyurethanprepolymeren a), dadurch gekennzeichnet, daß sie erhaltlich sind auf Basis von

a) einem wenigstens teilweise kristallinen, verkappte Isocyanatgruppen enthaltenden Polyurethanprepolymer, das im DSC-Diagramm eine Endothermie des Aufschmelzens kristalliner Weichsegmentbereiche im Temperaturbereich zwischen 40 und 150 °C zeigt, auf Basis

a1) mindestens einer wenigstens teilweise kristallinen organischen Polyhydroxylverbindung aus der Gruppe der linearen Polyester oder Polycarbonate mit Molekulargewichten größer 500, die im DSC-Diagramm eine Endothermie des Aufschmelzens kristalliner Weichsegmentbereiche im Temperaturbereich zwischen 40 und 150 °C zeigt, und

a2) gegebenenfalls einer Polyhydroxylverbindung mit einer Hydroxylfunktionalität von wenigstens 2 und einem Molekulargewicht kleiner 500, sowie

a3) einer Polyisocyanatkomponente, bestehend aus mindestens einem Diisocyanat, sowie

a4) mindestens einem aus der Polyurethanchemie bekannten monofunktionellen Blockierungsmittel für Isocyanatgruppen,
wobei ein Äquivalenzverhältnis der Isocyanatgruppen der Komponente a3) zu der Summe der gegen Isocyanatgruppen reaktiven Gruppen der Komponenten a1) und a2) von 1,1 bis 3 eingehalten wird und wobei ein Äquivalenzverhältnis der aus dem Verhältnis der Komponenten al) bis a3) resultierenden Isocyanatgruppen zu monofunktionellem Blockierungsmittel a4) von 0,8 bis 1,15 eingehalten wird, sowie
b) mindestens einem niedermolekularen NH- und/oder OH-funktionellen Kettenverlängerungs- oder Vernetzungsmittel des Molekulargewichtsbereichs 32 bis 500 mit einer Funktionalität, von mindestens 2.

2. Polyurethanklebstoffe gemäß wenigstens einem der vorhergehenden Ansprüche, dadurch gekennzeichnet, daß die Polyhydroxylverbindung a1) ein Molekulargewicht von 2.000 bis 5.000 aufweist.

3. Polyurethanklebstoffe gemäß wenigstens einem der vorhergehenden Ansprüche, dadurch gekennzeichnet, daß die Komponente a1) ein Adipinsäureester mit 1,6-Hexandiol oder 1,4-Butandiol ist.

4. Klebstoffe nach wenigstens einem der vorhergehenden Ansprüche, dadurch gekennzeichnet, daß das Isocyanat a3) difunktionell ist.

5. Klebstoffe nach wenigstens einem der vorhergehenden Ansprüche, dadurch gekennzeichnet, daß das Isocyanat a3) Hexamethylendiisocyanat, 1,4-Diisocyanatocyclohexan, 4,4'-Diisocyanatodicyclohexylmethan, 4,4'-Diisocyanato-diphenylmethan ist.

6. Klebstoffe nach wenigstens einem der vorhergehenden Ansprüche, dadurch gekennzeichnet, daß das Blockierungsmittel a4) ein Nonylphenol, Hydroxyacetophenon, Hydroxybenzoesäureester, 4-Hydroxybenzoesäureethylester, 4-Hydroxybenzoesäuremethylester, 2-Butanonoxim, Malonester oder ε-Caprolactam ist.

7. Verfahren zum Verkleben von Substraten mit einem Polyurethanklebstoff, dadurch gekennzeichnet, daß ein Klebstoff gemäß wenigstens einem der vorhergehenden Ansprüche verwendet wird.


## Claims

1. Heat cross-linkable, predominantly linear polyurethane adhesives based on polyurethane prepolymers a) containing isocyanate groups, which adhesives are at least partly crystalline at room temperature, characterised in that they are obtainable from
   a) an at least partly crystalline polyurethane prepolymer containing masked isocyanate groups, which has an endothermy of melting of crystalline soft segment regions in the temperature range of from 40 to 150°C on the DSC diagram, based on
      a1) at least one at least partly crystalline organic polyhydroxyl compound selected from linear polyesters or polycarbonates having molecular weights above 500 which have an endothermy of melting crystalline soft segment regions in the temperature range of from 40 to 150°C on the DSC diagram and
      a2) optionally a polyhydroxyl compound having a hydroxyl functionality of at least 2 and a molecular weight below 500 and
      a3) a polyisocyanate component consisting of at least one diisocyanate and
      a4) at least one monofunctional blocking agent for isocyanate groups known from polyurethane chemistry, the equivalent ratio of isocyanate groups of component a3) to the sum of isocyanate reactive groups of components a1) and a2) being maintained at 1.1 to 3 and the equivalent ratio of the isocyanate groups resulting the ratio of components a1) to a3) to monofunctional blocking agents a4) being maintained at 0.8 to 1.15 and
   b) at least one low molecular weight NH functional and/or OH functional chain lengthening or cross-linking agent in the molecular weight range of from 32 to 500 having a functionality of at least 2.

2. Polyurethane adhesives according to at least one of the preceding claims, characterised in that the polyhydroxyl compound a1) has a molecular weight of from 2000 to 5000.

3. Polyurethane adhesives according to at least one of the preceding Claims, characterised in that component a1) is an adipic acid ester of 1,6-hexanediol or 1,4-butanediol.

**4.** Adhesives according to at least one of the preceding Claims, characterised in that isocyanate a3) is difunctional.

**5.** Adhesives according to at least one of the preceding Claims, characterised in that isocyanate a3) is hexamethylene diisocyanate, 1,4-diisocyanatocyclohexane, 4,4'-diisocyanatodicyclohexylmethane or 4,4'-diisocyanato-diphenylmethane.

**6.** Adhesives according to at least one of the preceding Claims, characterised in that the blocking agent a4) is a nonylphenol, hydroxyacetophenone, hydroxy benzoic acid ester, 4-hydroxybenzoic acid ethyl ester, 4-hydroxybenzoic acid methyl ester, 2-butanone oxime, malonic ester or ε-caprolactam.

**7.** A process for bonding substrates by means of a polyurethane adhesive, characterised in that an adhesive according to at least one of the preceding Claims is used.

## Revendications

**1.** Adhésifs du type polyuréthanne réticulables à la chaleur, principalement linéaires, au moins partiellement cristallins à la température ambiante, à base de prépolymères de polyuréthanne a) contenant des groupes NCO, caractérisés en ce qu'ils sont obtenus à base

    a) d'un prépolymère de polyuréthanne aumoins partiellement cristallin, contenant des groupes isocyanato protégés, qui montre dans le diagramme d'un indice calorimétrique différentiel une endothermie de fusion des zones cristallines des segments mous dans la plage de températures de 40 à 150°C, à base

        a1) d'au moins un composé polyhydroxylé organique au moins partiellement cristallin, du groupe des polyesters ou polycarbonates linéaires ayant des poids moléculaires supérieurs à 500, qui montre dans le diagramme d'analyse calorimétrique différentiel une endothermie de fusion des zones cristallines des segments mous dans la plage de températures de 40 à 150°C et

        a2) le cas échéant d'un composé polyhydroxylique ayant une fonctionnalité hydroxyle d'au moins 2 et un poids moléculaire inférieur à 500, ainsi que

        a3) d'un composant polyisocyanate, constitué d'au moins un diisocyanate, ainsi que

        a4) d'au moins un agent monofonctionnel de protection des groupes isocyanato, connu dans la chimie des polyuréthannes,

    en respectant un rapport d'équivalence des groupes isocyanato du composant a3) à la somme des groupes réactifs vis-à-vis de groupes isocyanato des composants a1) et a2) de 1,1 à 3 et en respectant un rapport d'équivalence des groupes isocyanato résultant du rapport des composants a1) à a3) à l'agent protecteur monofonctionnel a4) de 0,8 à 1,15, ainsi que

    b) d'au moins un agent d'allongement de chaîne ou de réticulation à fonctionnalité NH et/ou OH de bas poids moléculaire compris dans la plage de 32 à 500, avec une fonctionnalité d'au moins 2.

**2.** Adhésifs du type polyuréthanne suivant l'une au moins des revendications précédentes, caractérisés en ce que le composé polyhydroxylique a1) présente un poids moléculaire de 2000 à 5000.

**3.** Adhésifs du type polyuréthanne suivant l'une au moins des revendications précédentes, caractérisés en ce que le composant a1) est un ester d'acide adipique et du 1,6-hexanediol ou du 1,4-butanediol.

**4.** Adhésifs suivant au moins l'une des revendications précédentes, caractérisés en ce que l'isocyanate a3) est difonctionnel.

**5.** Adhésifs suivant au moins l'une des revendications précédentes, caractérisés en ce que l'isocyanate a3) est l'hexaméthylènediisocyanate, le 1,4-diisocyanatocyclohexane, le 4,4'-diisocyanatodicyclohexylméthane, le 4,4'-diisocyanatodiphénylméthane.

**6.** Adhésifs suivant au moins l'une des revendications précédentes, caractérisés en ce que l'agent protecteur a4) est un nonylphénol, l'hydroxyacétophénone, un ester d'acide hydroxybenzoïque, l'ester éthylique d'acide 4-hyroxybenzoïque, l'ester méthylique d'acide 4-hydroxybenzoïque, la 2-butanone-oxime, un ester d'acide malonique ou l'ε-caprolactame.

7. Procédé de collage de substrats à l'aide d'un adhésif du type polyuréthanne, caractérisé en ce qu'on utilise un adhésif suivant au moins l'une des revendications précédentes.